# EUROPEAN PATENT APPLICATION

(11) **EP 3 670 585 A1**
(43) Date of publication of application: **24.06.2020**
(21) Application number: 18846490.3
(22) Date of filing: 31.07.2018
(51) Int. Cl.: C08J 9/04, C08J 9/14, C08K 5/06, C08K 5/098, C08L 25/04

(54) **FLAME-RESISTANT FOAMED STYRENE-BASED RESIN COMPOSITION**

(30) Priority: 17.08.2017 JP 2017157608
(71) Applicant: Dai-Ichi Kogyo Seiyaku Co., Ltd., Kyoto-shi, Kyoto 600-8873 (JP)
(72) Inventor: NISHIURA, Masahito, Kyoto-shi Kyoto 600-8873 (JP)
(74) Representative: Hoffmann Eitle
(86) International application number: PCT/JP2018/028688
(87) International publication number: WO 2019/035353

(57) **Abstract**

The present invention provides a recyclable flame-retardant expandable styrene-based resin composition that attains high flame retardancy and high heat stability with a small addition amount of a bromine-containing flame retardant. Specifically, the present invention provides a flame-retardant expandable styrene-based resin composition comprising a styrene-based resin (A), a flame retardant (B), fatty acid zinc (C), a heat stabilizer (D), and a foaming agent (F), wherein the flame retardant (B) comprises tetrabromobisphenol A-bis(2,3-dibromo-2-methylpropyl ether) (B1) and a bromine-containing flame retardant (B2) other than (B1).

## Description

### Technical Field

The present invention relates to a flame-retardant foamable styrene-based resin composition that is formed into a foamed article by melting the composition in an extruder, introducing a foaming agent under pressure into the melt, and then extruding the melt.

### Background Art

Styrene-based resin foamed articles, which are lightweight, have been used in various applications, including heat insulation applications for home electrical appliances, building materials, or the like, and civil engineering applications such as an embankment method.

Styrene-based resins are made of carbon and hydrogen alone, and burn intensely with evolution of black smoke once ignited. For this reason, a flame retardant must be added to impart flame retardancy to the resins in some applications. For example, extrusion-foamed polystyrene molded articles used as a heat insulating material must pass the combustion test of JIS A9511. Moreover, synthetic resin foamed articles with an oxygen index of less than 26.0 are regarded as designated combustibles according to the Fire Service Act, and the storage, conveyance, and transfer of a foamed article larger than 20 m³ is highly regulated, and therefore such articles are not practically marketable.

Hexabromocyclododecane (HBCD), by which a desired flame retardant effect is attained at a relatively small addition amount, has been used to impart flame retardancy to styrene-based resin foamed articles produced by an extrusion method. However, the use of HBCD is prohibited in Japan due to its harmful effect, and other flame retardants are being used in place of HBCD in other countries.

Use of other bromine-based flame retardants instead of HBCD for styrene-based resin extrusion-foamed articles has been proposed, and one of such flame retardants is tetrabromobisphenol A-bis(2,3-dibromo-2-methylpropyl ether). This flame retardant has a flame retardant effect comparable to that of HBCD, bus is low in heat stability. Accordingly, the present Applicant has proposed that the replacement of part of tetrabromobisphenol A-bis(2,3-dibromo-2-methylpropyl ether) (B1) with tetrabromobisphenol A-bis(2,3-dibromopropyl ether) for attaining flame retardancy represented by an oxygen index of 26.0 or more prevents the degradation of the resin typified by decrease in molecular weight in comparison with the case of using (B1) alone. Other patent literature also proposes use of the above flame retardant mixture for styrene-based resin extrusion-foamed articles.

### Citation List

### Patent Literature

PTL 1: JP2010-275528A
PTL 2: JP2012-107227A
PTL 3: JP2012-136674A
PTL 4: JP2012-136675A

### Summary of Invention

### Technical Problem

Although a foamed article having improved heat stability and flame retardancy comparable to that attained by the flame retardant (B1) alone can be obtained in the same addition amount by the use of the above flame retardant in combination for imparting flame retardancy to a styrene-based resin extrusion-foamed article, it is desired to further improve heat stability typified by coloring and decrease in molecular weight. Moreover, there is also desired research for a flame retardant that can achieve a comparable flame retardant effect, with the same level of addition amount as in the case of the flame retardant (B1) alone, and that can further improve the stability. The present invention aims to satisfy these demands.

### Solution to Problem

In order to solve the above problems, the present invention provides a flame-retardant foamable styrene-based resin composition comprising a styrene-based resin (A), a flame retardant (B), fatty acid zinc (C), a heat stabilizer (D), and a foaming agent (F), wherein the flame retardant (B) comprises tetrabromobisphenol A-bis(2,3-dibromo-2-methylpropyl ether) (B1) and a bromine-containing flame retardant (B2) other than (B1).

### Advantageous Effects of Invention

When added as a flame retardant for a styrene-based resin extrusion-foamed article, tetrabromobisphenol A-bis(2,3-dibromo-2-methylpropyl ether) (B1) and a bromine-containing flame retardant (B2) other than (B1) in combination may not achieve a desired level of flame retardancy. Even in such a case, the addition of fatty acid zinc (C) and a heat stabilizer (D) attains a desired flame retardancy level, and at the same time improves heat stability typified by coloring of the foamed article and decrease in resin molecular weight to such an extent that recycling is not disrupted.

### Description of Embodiments

Examples of the styrene-based resin (A) of the present invention include homopolymers of styrene; copolymers of styrene with o-methylstyrene, m-methylstyrene, p-methylstyrene, 2,4-dimethylstyrene, ethylstyrene, p-tert-butylstyrene, α-methylstyrene, α-methyl-p-methylstyrene, 1,1-diphenylethylene, p-(N,N-diethylaminoethyl)styrene, p-(N,N-diethylaminomethyl)styrene, or the like; and mixtures thereof. The styrene-based resin (A) is preferably one containing 50% by weight or more of a styrene monomer, and is typically polystyrene.

The styrene-based resin may further contain a rubbery polymer. Examples of the rubbery polymer include polybutadiene, polyisoprene, styrene-butadiene copolymer, styrene-isoprene copolymer, acrylonitrile-butadiene copolymer, styrene-isobutylene-butadiene-based copolymer, butadiene-(meth)acrylate copolymer, styrene-butadiene block copolymer, styrene-isoprene block copolymer, butyl rubber, ethylene-α-olefin-based copolymer (ethylene-propylene rubber), ethylene-α-olefin-polyene copolymer (ethylene-propylene-diene rubber), silicone rubber, acrylic rubber, and hydrogenated diene-based rubber (hydrogenated styrene-butadiene block copolymer and hydrogenated butadiene-based polymer). Such rubbery polymers can be used alone or in a combination of two or more. The amount of the rubbery polymer is preferably 30% by weight or less, and more preferably 20% by weight or less in the monomer components.

As a flame retardant (B), the present invention contains tetrabromobisphenol A-bis(2,3-dibromo-2-methylpropyl ether) (B1) and a bromine-containing flame retardant (B2) other than (B1). Specific examples of the bromine-containing flame retardant (B2) other than (B1) include tetrabromobisphenol A-bis(2,3-dibromopropyl ether), tris(2,3-dibromopropyl)isocyanurate, tetrabromobisphenol S-bis(2,3-dibromopropyl ether), tetrabromobisphenol F-bis(2,3-dibromopropyl ether), tetrabromobisphenol A, hexabromobenzene, pentabromotoluene, polybromodiphenyl ether, polybromodiphenylethane, bispolybromophenoxyethane, tris(tribromophenoxy)triazine, polybromophenylindane, polypentabromobenzyl acrylate, ethylene bistetrabromophthalimide, tris(tribromoneopentyl)phosphate, and brominated epoxy resin oligomer. Two or more flame retardants (B2) can be used in combination. As the flame retardant (B2), tetrabromobisphenol A-bis(2,3-dibromopropyl ether), tris(2,3-dibromopropyl)isocyanurate, or tris(tribromophenoxy)triazine is preferably used from the view point of attaining higher flame retardancy and higher heat stability. The flame retardant (B) may further contain a phosphate, such as triphenyl phosphate, tricresyl phosphate, or trixylenyl phosphate; silicone; a hydrated metal compound, such as magnesium hydroxide; or the like.

The total amount of the flame retardants (B1) and (B2) may be 1 to 10 parts by weight, and preferably 1 to 6 parts by weight, per 100 parts by weight of the styrene-based resin. The ratio of the flame retardants (B1) and (B2) in the mixture is 1/99 to 40/60, preferably 2/98 to 30/70, and more preferably 3/97 to 20/80 on a weight basis. High flame retardancy and high heat stability can be attained by setting the ratio within such a range.

The present invention is characterized in that fatty acid zinc (C) and a heat stabilizer (D) are used when flame retardancy is imparted to a styrene-based resin extrusion-foamed article using the flame retardants (B1) and (B2). Because of this characteristic, excellent flame retardancy and excellent heat stability are attained.

Examples of the fatty acid zinc (C) include saturated fatty acid zinc, such as zinc acetate, zinc propionate, zinc butanoate, zinc pentanoate, zinc hexanoate, zinc heptanoate, zinc octylate, zinc nonanoate, zinc decanoate, zinc laurate, zinc myristate, zinc palmitate, zinc stearate, zinc arachidate, zinc behenate, and zinc lignocerate; and unsaturated fatty acid zinc, such as zinc palmitate, zinc oleate, zinc linoleate, and zinc linolenate. Of these, saturated fatty acid zinc is preferred because higher dispersibility in the styrene-based resin can be attained. From the view point of attaining higher flame retardancy and higher heat stability, fatty acid zinc having 8 to 30 carbon atoms is preferred, fatty acid zinc having 12 to 24 carbon atoms is more preferred, and fatty acid zinc having 16 to 20 carbon atoms is even more preferred.

Examples of the heat stabilizer (D) include phosphite compounds, thioether compounds, hindered phenol compounds, hindered amine compounds, organotin compounds, phosphates, and hydrotalcite.

Examples of the phosphite compounds include tris(2,4-di-tert-butylphenyl)phosphite, bis(2,4-di-tert-butylphenyl)pentaerythritol diphosphite, bis[2,4-bis(1,1-dimethylethyl)-6-methylphenyl]ethyl phophite, tetrakis(2,4-di-tert-butylphenyl)[1,1-biphenyl]-4,4'-diyl bisphosphonite, bis(nonylphenyl)pentaerythritol diphosphite, bisstearyl pentaerythritol diphosphite, bis(2,6-di-tert-butyl-4-methylphenyl)pentaerythritol diphosphite, 2,2'-methylenebis(4,6-di-tert-butyl-1-phenyloxy) (2-ethylhexyloxy)phosphorus, tetra(tridecyl)-4,4'-butylidene-bis(2-tert-butyl-5-methylphenyl)diphosphite, hexatridecyl-1,1,3-tris(3-tert-butyl-6-methyl-4-oxyphenyl)-3-methylpropanetriphosphite, mono(dinonylphenyl)mono-p-nonylphenyl phosphite, tris (monononylphenyl) phosphite, tetra (C₁₂₋₁₆) alkyl-4, 4'-isopropylidene-(bisphenyl)diphosphite, mono- or diphenyl-mono- or dialkyl (or alkoxyalkyl (C₈₋₁₃)) phosphite, diphenyl isodecyl phosphite, trisdecyl phosphite, and triphenyl phosphite.

Examples of the thioether compounds include dilauryl-3,3'-thiodipropionate, dimyristyl-3,3'-thiodipropionate, distearyl-3,3'-thiodipropionate, pentaerythritol tetrakis(3-laurylthiopropionate), ditridecyl-3,3'-thiodipropionate, and 2-mercaptobenzimidazole.

Examples of the hindered phenol compounds include 1,6-hexanediol-bis[3-(3,5-di-tert-butyl-4-hydroxyphenyl)propionate], triethylene glycol-bis[3-(3-tert-butyl-5-methyl-4-hydroxyphenyl) propionate], glycerin tris[3-(3,5-di-tert-butyl-4-hydroxyphenyl)-propionate], pentaerythritol tetrakis[3-(3,5-di-)-tert-butyl-4-hydroxyphenyl)propionate], octadecyl-3-(3,5-di-tert-butyl-4-hydroxyphenyl)propionate, thiodiethylene bis[3-(3,5-di-tert-butyl-4-hydroxyphenyl)propionate], N,N'-hexane-1,6-diylbis[3-(3,5-di-tert-butyl-4-hydroxyphenyl)propionamide], 2,4-dimethyl-6-(1-methylpentadecyl)phenol, diethyl[[3,5-bis(1,1-dimethylethyl)-4-hydroxyphenyl]methyl]phosphonate, calcium diethylbis[[3,5-bis (1,1-dimethylethyl)-4-hydroxyphenyl]methyl]phosphonate, 3,3',3", 5,5',5"-hexa-tert-butyl-a,a',a"-(mesitylene-2,4,6-triyl)tri-p-cresol, 4,6-bis(octylthiomethyl)-o-cresol, ethylenebis(oxyethylene)bis[3-(5-tert-butyl-4-hydroxy-m-tolyl)propionate], hexamethylenebis[3-(3,5-di-tert-butyl-4-hydroxyphenyl)propionate], 1,3,5-tris(3,5-di-tert-butyl-4-hydroxybenzyl)-1,3,5-triazine-2,4,6(1H,3H,5H)-trione, 1,3,5-tris[(4-tert-butyl-3-hydroxy-2,6-xylyl)methyl]-1,3,5-triazine-2,4,6(1H,3H,5H)-trione, and 2,6-di-tert-butyl-4-(4,6-bis(octylthio)-1,3,5-triazin-2-ylamino)phenol.

Examples of the hindered amine compounds include 4-benzoyloxy-2,2,6,6-tetramethylpiperidine, bis(2,2,6,6-tetramethyl-4-piperidinyl)sebacate, bis(1,2,2,6,6-pentamethyl-4-piperidinyl)sebacate, bis(1,2,2,6,6-pentamethyl-4-piperidinyl)-2-(3,5-di-tert-butyl-4-hydroxybenzyl-2-n-butylmalonate), tetrakis(2,2,6,6-tetramethyl-4-piperidinyl-1,2,3,4-butanetetracarboxylate), and tetrakis(1,2,2,6,6-pentamethyl-4-piperidinyl)-1,2,3,4-butanetetracarboxylate.

Examples of the organotin compounds include dioctyltin dilaurate and dioctyltin maleate, and examples of the phosphates include triphenyl phosphate, tricresyl phosphate, and trixylenyl phosphate.

The heat stabilizer (D) is preferably a phosphite compound because higher flame retardancy and higher heat stability are attained.

The fatty acid zinc (C) is preferably used in an amount of 0.0005 to 0.05 parts by weight, and more preferably 0.001 to 0.03 parts by weight, per 100 parts by weight of the styrene-based resin (A). Use of the fatty acid zinc (C) in the above proportion ensures higher flame retardancy and higher heat stability.

The fatty acid zinc (C) is preferably used in an amount of 0.01 to 3 parts by weight, more preferably 0.02 to 2 parts by weight, and even more preferably 0.03 to 1 part by mass, per 100 parts by weight of the total amount of the flame retardants (B1) and (B2). Use of the fatty acid zinc (C) in the above proportion ensures higher flame retardancy and higher heat stability

The fatty acid zinc (C) is preferably used in an amount of 0.025 to 300 parts by weight, and more preferably 0.1 to 66 parts by weight, per 100 parts by weight of the tetrabromobisphenol A-bis (2,3-dibromo-2-methylpropyl ether) (B1). Use of the fatty acid zinc (C) in the above proportion ensures higher flame retardancy and higher heat stability

The fatty acid zinc (C) is preferably used in an amount of 0.01 to 5 parts by weight, and more preferably 0.03 to 2.5 parts by weight, per 100 parts by weight of the bromine-containing flame retardant (B2) other than (B1). Use of the fatty acid zinc (C) in the above proportion ensures higher flame retardancy and higher heat stability

The heat stabilizer (D) is preferably used in an amount of 0.005 to 0.2 parts by weight, more preferably 0.01 to 0.1 parts by weight, and even more preferably 0.02 to 0.08 parts by weight, per 100 parts by weight of the styrene-based resin (A). Use of the heat stabilizer (D) in the above proportion ensures higher flame retardancy and higher heat stability.

The heat stabilizer (D) is preferably used in an amount of 0.1 to 10 parts by weight, more preferably 0.3 to 5 parts by weight, and even more preferably 0.5 to 3 parts by mass, per 100 parts by weight of the total amount of the flame retardants (B1) and (B2). Use of the heat stabilizer (D) in the above proportion ensures higher flame retardancy and higher heat stability.

The heat stabilizer (D) is preferably used in an amount of 0.2 to 2000 parts by weight, and more preferably 2 to 67 parts by weight, per 100 parts by weight of the tetrabromobisphenol A-bis (2,3-dibromo-2-methylpropyl ether) (B1) in the flame retardant (B). Use of the heat stabilizer (D) in the above proportion ensures higher flame retardancy and higher heat stability.

The heat stabilizer (D) is preferably used in an amount of 0.05 to 33 parts by weight, and more preferably 0.3 to 6.3 parts by weight, per 100 parts by weight of the bromine-containing flame retardant (B2) other than (B1). Use of the heat stabilizer (D) in the above proportion ensures higher flame retardancy and higher heat stability.

The heat stabilizer (D) is preferably used in an amount of 16 to 20000 parts by weight, and more preferably 50 to 10000 parts by weight, per 100 parts by weight of the fatty acid zinc (C). Use of the fatty acid zinc (C) and the heat stabilizer (D) in the above proportions ensures higher flame retardancy and higher heat stability.

The flame retardant effect of the bromine-based flame retardant is known to be enhanced by a flame retardancy enhancer (E), such as a radical generator (E1) or a phthalocyanine metal complex (E2). Examples of such a radical generator (E1) include cumene peroxide, cumene hydroperoxide, di-tert-butyl peroxide, di-tert-hexyl peroxide, 2,5-dimethyl-2,5-di(tert-butyl peroxy)hexyne-3, dicumyl peroxide, and 2,3-dimethyl-2,3-diphenylbutane. Examples of the phthalocyanine metal complex (E2) include phthalocyanine iron, phthalocyanine manganese, and phthalocyanine cobalt. Dicumyl peroxide, 2,3-dimethyl-2,3-diphenylbutane, and phthalocyanine iron are preferred.

The flame-retardant foamable styrene-based resin composition of the present invention is preferably used for extrusion foaming. When the flame-retardant foamable styrene-based resin composition of the present invention is used for extrusion foaming, higher flame retardancy and higher heat stability are attained.

The flame-retardant foamable styrene-based resin composition of the present invention can be formed into foamed molded articles by an extrusion-foaming process. In the extrusion-foaming process, the flame retardant (B), fatty acid zinc (c), and other additives are melt-mixed with the styrene-based resin (A) in an extruder, and then a foaming agent (F) is introduced under pressure into the molten mixture, which is then extruded through the die of the extruder to the atmosphere, thereby foaming and molding the mixture.

Examples of the foaming agent (F) include volatile organic foaming agents, such as propane, butane, isobutane, pentane, cyclopentane, hexane, cyclohexane, 1-chloro-1,1-difluoroethane, monochlorodifluoromethane, monochloro-1,2,2,2-tetrafluoroethane, 1,1-difluoroethane, 1,1,1,2-tetrafluoroethane, 1,1,3,3,3-pentafluoropropane, dichloromethane, 1,2-dichloroethane, dimethyl ether, diethyl ether, and ethyl methyl ether; inorganic foaming agents, such as water, nitrogen, and carbon dioxide; chemical foaming agents, such as azo compounds; and the like. These can be used alone or in combination of two or more. The amount of the foaming agent varies depending on properties required for foamed articles or molding methods, and thus is not limited. The amount of the foaming agent is preferably 0.01 to 0.5 moles, and more preferably 0.05 to 0.3 moles, per 100 parts by weight of the styrene-based resin (A).

When producing the flame-retardant styrene-based resin foamed molded article of the present invention, a foam nucleating agent (G) may further be incorporated in addition to the foaming agent (F). Examples of such a foam nucleating agent include talc, bentonite, kaolin, mica, silica, clay, and diatomaceous earth. The amount of the foam nucleating agent when used is preferably 0.01 to 20 parts by weight, and more preferably 0.1 to 10 parts by weight, per 100 parts by weight of the styrene-based resin (A) .

The flame-retardant foamable styrene-based resin composition of the present invention may further include a known resin additive, such as a light stabilizer, UV-absorbing agent, UV-stabilizing agent, heavy-metal-deactivating agent, impact-strength-improving agent, colorant, lubricant, anti-dripping agent, crystal-nucleating agent, antistatic agent, and compatibilizing agent within a range that does not impair the effect of the present invention.

### Examples

The present invention is described in detail below with reference to Examples and Comparative Examples; however, the present invention is not limited to these.

The raw materials used in the Examples and Comparative Examples are as follows.
- Styrene-based resin (A)
   (A-1) GP-PS; PSJ polystyrene G9305 (produced by PS Japan Corporation)
- Flame retardant (B)
   (B1) Tetrabromobisphenol A-bis(2,3-dibromo-2-methylpropyl ether); trade name PYROGUARD SR-130 (produced by Dai-Ichi Kogyo Seiyaku Co., Ltd.)
   (B2-1) Tetrabromobisphenol A-bis(2,3-dibromo-propyl ether); trade name PYROGUARD SR720N (produced by Dai-Ichi Kogyo Seiyaku Co., Ltd.)
   (B2-2) Tris(2,3-dibromopropyl)isocyanurate; trade name PYROGUARD SR-750 (produced by Dai-Ichi Kogyo Seiyaku Co., Ltd.)
   (B2-3) Tris(tribromophenoxy)triazine; trade name PYROGUARD SR245 (produced by Dai-Ichi Kogyo Seiyaku Co., Ltd.)
   (B2-4) Brominated epoxy oligomer; trade name YDB-406 (produced by Nippon Steel & Sumikin Chemical Co., Ltd.)
   (B2-5) Hexabromocyclododecane; trade name PYROGUARD SR-103 (produced by Dai-Ichi Kogyo Seiyaku Co., Ltd.) (for Comparative Examples)
   (B3) Triphenyl phosphate; trade name TPP (produced by Daihachi Chemical Industry Co., Ltd.)
- Fatty acid zinc (C)
   (C-1) Zinc stearate; trade name Zn-St (produced by Nitto Kasei Kogyo Co., Ltd.)
   (C-2) Zinc 12-hydroxystearate; trade name ZS-6 (produced by Nitto Kasei Kogyo Co., Ltd.)
   (C-3) Zinc laurate; trade name ZS-3 (produced by Nitto Kasei Kogyo Co., Ltd.)
- Heat stabilizer (D)
   (D-1) Bis(2,6-di-tert-butyl-4-methylphenyl)pentaerythritol diphosphate; trade name ADK STAB PEP-36 (produced by ADEKA Corporation)
   (D-2) Tris(2,4-di-tert-butylphenyl)phosphite; trade name ADK STAB 2112 (produced by ADEKA Corporation)
   (D-3) Bisstearyl pentaerythritol diphosphate; trade name ADK STAB PEP-8 (produced by ADEKA Corporation)
   (D-4) Pentaerythritol tetrakis[3-(3,5-di-tert-butyl-4-hydroxyphenyl)propionate]; trade name IRGANOX 1010 (produced by BASF Corporation)
- Flame retardancy enhancer (E)
   (E-1) 2,3-Dimethyl-2,3-diphenylbutane; NOFMER BC-90 (produced by NOF Corporation)
- Foaming agent (F)
   (F-1) Isobutane
   (F-2) Dimethyl ether
- Foam nucleating agent (G)
   (G-1) Talc MS (produced by Nippon Talc Co., Ltd.)

### Test Piece Preparation Method

### Extrusion-foamed molded article

A twin-stage extruder including an extruder having a diameter of 65 mm and an extruder having a diameter of 90 mm in series was provided. The raw materials shown in Tables 1 and 2, excluding a foaming agent (F), were placed in the extruder having a diameter of 65 mm, heated to 200°C and melted, followed by plasticization and kneading, thereby obtaining a styrene-based resin composition. Subsequently, a prescribed amount of the foaming agent was introduced under pressure through a separate line to the end of the 65-mm extruder (the side opposite to the die of the extruder having a diameter of 90 mm). Then, the resin temperature was cooled to 120°C in the extruder having a diameter of 90 mm, and the material was extruded to the atmosphere through a die lip having a rectangular cross section of 2.5 mm (thickness direction) x 45 mm (width direction) provided at an end of the extruder having a diameter of 90 mm. An extrusion-foamed molded article of a styrene-based resin having a rectangular parallelepiped shape was thereby obtained.

The foamed molded article was evaluated according to the following methods.

### Flame Retardancy

The oxygen index was measured according to JIS K7201.
Good: The oxygen index is 26 or more.
Poor: The oxygen index is less than 26.

### Decrease in Molecular Weight

The molecular weight of a styrene-based resin before foaming and the molecular weight of a flame-retardant styrene-based resin foamed molded article were measured by GPC analysis. The decrease (%) in weight average molecular weight (Mw) between before and after the molding of the polystyrene-based resin was calculated.

### Heat Stability

An extrusion-foamed molded article under the test was sliced with a utility knife to form a board, which was subsequently compressed with a twin roll and then coarsely pulverized with a pulverizer. The coarsely pulverized material was introduced into a Labo Plastomill, melt-kneaded at 200°C, and then immediately taken out and molded with a cooling press into a 3.2-mm-thick plate shape. The resulting plate-shaped molded article was heated with a hot press at 220°C for 40 minutes, and then cooled with a cooling press, thereby obtaining a sample for a heat resistance test. Using an SD 6000 spectrophotometer produced by Nippon Denshoku Industries Co., Ltd., the ΔE of the sample for a heat resistance test was measured based on a standard white plate. A smaller ΔE indicates higher heat resistance.

Table 1 to 3 show the formulation of the resin compositions and the test results of the Examples and Comparative Examples. The numerical values of the components in the tables are in parts by weight.

**Table 1**

| | | Example | | | | | | | | | |
|---|---|---|---|---|---|---|---|---|---|---|---|
| | | 1 | 2 | 3 | 4 | 5 | 6 | 7 | 8 | 9 | 10 |
| Styrene-based resin | A-1 | 100 | 100 | 100 | 100 | 10C | 100 | 100 | 100 | 100 | 100 |
| Flame retardant | B1 | 0.15 | 0.3 | 0.6 | 0.9 | 0.3 | 0.3 | 0.3 | 0.3 | 0.3 | 0.3 |
| | B2-1 | 2.85 | 2.7 | 2.4 | 2.1 | | | | 2.7 | 2.7 | 2.7 |
| | B2-2 | | | | | 2.7 | | | | | |
| | B2-3 | | | | | | 2.7 | | | | |
| | B2-4 | | | | | | | 2.7 | | | |
| | B3 | | | | | | | | 1 | | |
| Fatty acid zinc | C-1 | 0.03 | 0.002 | 0.002 | 0.002 | 0.01 | 0.01 | 0.01 | 0.01 | 0.001 | 0.01 |
| Heat stabilizer | D-1 | 0.04 | 0.04 | 0.04 | 0.04 | 0.04 | 0.04 | 0.04 | 0.04 | 0.04 | 0.04 |
| Foaming agent | F-1 | 3 | 3 | 3 | 3 | 3 | 3 | 3 | 3 | 3 | 3 |
| | F-2 | 3 | 3 | 3 | 3 | 3 | 3 | 3 | 3 | 3 | 3 |
| Foam nucleating agent | H | 1 | 1 | 1 | 1 | 1 | 1 | 1 | 1 | 1 | 1 |
| Evaluation | Flame retardancy | Good | Good | Good | Good | Good | Good | Good | Good | Good | Good |
| | Decrease in molecular weight (%) | 1 | 2 | 4 | 6 | 4 | 4 | 4 | 5 | 2 | 4 |
| | Heat-resistance ΔE | 20 | 17 | 19 | 23 | 19 | 19 | 20 | 21 | 12 | 20 |

**Table 2**

| | | Example | | | | | | | | |
|---|---|---|---|---|---|---|---|---|---|---|
| | | 11 | 12 | 13 | 14 | 15 | 16 | 17 | 18 | 19 |
| Styrene-based resin | A-1 | 10C | 100 | 100 | 100 | 10C | 100 | 100 | 100 | 10C |
| Flame retardant | B1 | 0.3 | 0.3 | 0.3 | 0.3 | 0.3 | 0.3 | 0.3 | 0.3 | 0.3 |
| | B2-1 | 2.7 | 2.7 | 2.7 | 2.7 | 2.7 | 2.7 | 2.7 | 2.7 | 2.7 |
| Fatty acid zinc | C-1 | | | 0.002 | 0.002 | 0.002 | 0.002 | 0.002 | 0.002 | 0.002 |
| | C-2 | 0.01 | | | | | | | | |
| | C-3 | | 0.002 | | | | | | | |
| Heat stabilizer | D-1 | 0.04 | 0.04 | 0.02 | 0.08 | | | | 0.04 | 0.04 |
| | D-2 | | | | | 0.04 | | | | |
| | D-3 | | | | | | 0.04 | | | |
| | D-4 | | | | | | | 0.04 | | |
| Flame retardancy enhancer | E-1 | | | | | | | | 0.1 | |
| | E-2 | | | | | | | | | 0.1 |
| Foaming agent | F-1 | 3 | 3 | 3 | 3 | 3 | 3 | 3 | 3 | 3 |
| | F-2 | 3 | 3 | 3 | 3 | 3 | 3 | 3 | 3 | 3 |
| Foam nucleating agent | H | 1 | 1 | 1 | 1 | 1 | 1 | 1 | 1 | 1 |
| Evaluation | Flame retardancy | Good | Good | Good | Good | Good | Good | Good | Good | Good |
| | Decrease in molecular weight (%) | 4 | 2 | 3 | 2 | 2 | 2 | 3 | 5 | 5 |
| | Heat-resistance ΔE | 2C | 17 | 19 | 15 | 17 | 17 | 17 | 23 | 23 |

**Table 3**

| | | Comparative Example | | | | | | | | |
|---|---|---|---|---|---|---|---|---|---|---|
| | | 1 | 2 | 3 | 4 | 5 | 6 | 7 | 8 | 9 |
| Styrene-based resin | A-1 | 100 | 100 | 100 | 100 | 100 | 100 | 100 | 100 | 10C |
| Flame retardant | B1 | 0.3 | 0.3 | 0.3 | 3 | - | - | - | - | - |
| | B2-1 | 2.7 | 2.7 | 2.7 | - | 3 | | | | |
| | B2-2 | | | | | | 3 | | | |
| | B2-3 | | | | | | | 3 | | |
| | B2-4 | | | | | | | | 3 | |
| | B2-5 | | | | | | | | | 3 |
| Fatty acid zinc | C-1 | - | - | 0.002 | 0.002 | 0.002 | 0.002 | 0.002 | 0.002 | 0.002 |
| Heat stabilizer | D-1 | - | 0.04 | - | 0.04 | 0.04 | 0.04 | 0.04 | 0.04 | 0.04 |
| Foaming agent | F-1 | 3 | 3 | 3 | 3 | 3 | 3 | 3 | 3 | 3 |
| | F-2 | 3 | 3 | 3 | 3 | 3 | 3 | 3 | 3 | 3 |
| Foam nucleating agent | H | 1 | 1 | 1 | 1 | 1 | 1 | 1 | 1 | 1 |
| Evaluation | Flame retardancy | Poor | Poor | Good | Not moldable | Poor | Poor | Poor | Poor | Not moldable |
| | Decrease in molecular weight (%) | 1 | 1 | 10 | | 1 | 1 | 1 | 1 | |
| | Heat-resistance ΔE | 17 | 15 | 40 | | 12 | 12 | 12 | 12 | |

As is clear from Tables 1 and 2, the extrusion-foamed articles of Examples 1 to 19 are each satisfactory in flame retardancy, decrease in molecular weight, and heat resistance. In contrast, Table 3 indicates that the extrusion-foamed articles of Comparative Examples 1 and 2, and 5 to 8 are not satisfactory in flame retardancy, and the extrusion-foamed article of Comparative Example 3 is not satisfactory in decrease in molecular weight and heat resistance. Additionally, in Comparative Examples 4 and 9, the styrene-based resin compositions turned black, failing to obtain foamed molded articles.

## Claims

1. A flame-retardant expandable styrene-based resin composition comprising a styrene-based resin (A), a flame retardant (B), fatty acid zinc (C), a heat stabilizer (D), and a foaming agent (F),
wherein the flame retardant (B) comprises tetrabromobisphenol A-bis(2,3-dibromo-2-methylpropyl ether) (B1) and a bromine-containing flame retardant (B2) other than (B1).

2. The flame-retardant expandable styrene-based resin composition according to claim 1, wherein the ratio of the tetrabromobisphenol A-bis(2,3-dibromo-2-methylpropyl ether) (B1) to the bromine-containing flame retardant (B2) other than (B1) is 1/99 to 40/60 on a weight basis.

3. The flame-retardant expandable styrene-based resin composition according to claim 1 or 2, wherein the heat stabilizer (D) is contained in an amount of 16 to 20000 parts by mass per 100 parts by mass of the fatty acid zinc (C).

4. The flame-retardant expandable styrene-based resin composition according to any one of claims 1 to 3, wherein the fatty acid zinc (C) is contained in an amount of 0.025 to 300 parts by mass per 100 parts by mass of the tetrabromobisphenol A-bis(2,3-dibromo-2-methylpropyl ether) (B1).

5. The flame-retardant expandable styrene-based resin composition according to any one of claims 1 to 4, wherein the fatty acid zinc (C) is contained in an amount of 0.01 to 5 parts by mass per 100 parts by mass of the bromine-containing flame retardant (B2) other than (B1).

6. The flame-retardant expandable styrene-based resin composition according to any one of claims 1 to 5, wherein the bromine-containing flame retardant (B2) other than (B1) is at least one member selected from tetrabromobisphenol A-bis (2,3-dibromopropyl ether), tris(2,3-dibromopropyl)isocyanurate, tetrabromobisphenol S-bis(2,3-dibromopropyl ether), tetrabromobisphenol F-bis(2,3-dibromopropyl ether), tetrabromobisphenol A, hexabromobenzene, pentabromotoluene, polybromodiphenyl ether, polybromodiphenylethane, bispolybromophenoxyethane, tris(tribromophenoxy)triazine, polybromophenylindane, polypentabromobenzyl acrylate, ethylene bistetrabromophthalimide, tris(tribromoneopentyl)phosphate, and brominated epoxy resin oligomer.

7. The flame-retardant expandable styrene-based resin composition according to any one of claims 1 to 6, which is used for extrusion foaming.

8. A foamed molded article obtained by extrusion foaming the flame-retardant expandable styrene-based resin composition according to any one of claims 1 to 7.
